# EUROPÄISCHE PATENTANMELDUNG

(11) **EP 1 126 311 A2**
(43) Veröffentlichungstag der Anmeldung: **22.08.2001**
(21) Anmeldenummer: 01100644.2
(22) Anmeldetag: 11.01.2001
(51) Int. Cl.: G02F 1/1335, B60Q 3/04

(54) **Anzeigeeinrichtung**

(30) Priorität: 19.02.2000 DE 10007461; 06.06.2000 DE 10027635
(71) Anmelder: Mannesmann VDO AG, 60388 Frankfurt am Main (DE)
(72) Erfinder: Brohm, Thomas, Dr., 64859 Eppertshausen (DE); Lenart, Coloman, Dr., 64319 Pfungstadt (DE); Noll, Heinrich, Dr., 64823 Gross-Umstadt (DE); Burau, Alf, Dr., 63739 Aschaffenburg (DE)
(74) Vertreter: Klein, Thomas, Dipl.-Ing. (FH)

(57) **Zusammenfassung**

Die Erfindung betrifft eine Anzeigeeinrichtung (1), insbesondere in einem Kraftfahrzeug, mit einer von einer Lichtquelle (2) durchleuchtbaren Flüssigkristallzelle (4) und einem in dem Lichtweg zwischen Lichtquelle (2) und Flüssigkristallzelle (4) angeordneten Spektralfilter (5), wobei die Transmissionskurve nicht lichtdurchlässig geschalteter Abschnitte der Flüssigkristallzelle (4) im Wellenlängenbereich des sichtbaren Lichts einen Bereich eines Minimus oder mehrerer Minima und daran jeweils angrenzende Bereiche höherer Transmission aufweist.

Um die blickwinkelabhängige Farbänderung der Anzeigeeinrichtung zu verringern, weist die Transmissionskurve des Spektralfilters (5) ein Maximum oder mehrere Maxima im Bereich des Minimums bzw. der Minima der Transmissionskurve der nicht lichtdurchlässig geschalteten Abschnitte der Flüssigkristallzelle (4) auf und ist außerhalb des Bereichs des Minimums bzw. der Minima nahe null.

## Beschreibung

Die Erfindung betrifft eine Anzeigeeinrichtung, insbesondere in einem Kraftfahrzeug, mit einer von einer Lichtquelle durchleuchtbaren Flüssigkristallzelle und einem in dem Lichtweg zwischen Lichtquelle und Flüssigkristallzelle angeordneten Spektralfilter, wobei die Transmissionskurve nicht lichtdurchlässig geschalteter Abschnitte der Flüssigkristallzelle im Wellenlängenbereich des sichtbaren Lichts einen Bereich eines Minimums oder mehrerer Minima und daran jeweils angrenzende Bereiche höherer Transmission aufweist.

Eine derartige Anzeigeeinrichtung ist bekannt und wird bspw. in Kraftfahrzeugen als Kombinationsanzeigeinstrument oder als Funktionsanzeige, eingebaut in eine Instrumententafel oder eine Mittelkonsole, eingesetzt. Zur Beleuchtung der Flüssigkristallzelle ist es dabei üblich, Glühlampen zu verwenden, die in einem Reflektorgehäuse angeordnet sind und die Flüssigkristallzelle von einer einem Beobachter abgewandten Rückseite her durchleuchten. Zwischen Glühlampe und Flüssigkristallzelle kann wahlweise eine Farbfilterscheibe zur Beeinflussung der Anzeigefarbe der Flüssigkristallzelle angeordnet sein.

Bei den bekannten Anzeigeeinrichtungen besteht ein erheblicher Nachteil darin, daß sich die Anzeigefarbe in Abhängigkeit von dem Blickwinkel, unter dem der Beobachter die Anzeige betrachtet, insbesondere in den nicht lichtdurchlässig geschalteten Abschnitten der Flüssigkristallzelle, ändert. Dadurch ist die Ablesbarkeit vor allem von Anzeigeeinrichtungen mit großflächiger Flüssigkristallzelle oder mehreren Flüssigkristallzellen erheblich erschwert, da ein Beobachter auch ohne seine Position zu ändern unterschiedliche Bereiche der Flüssigkristallzelle bzw. die verschiedenen Flüssigkristallzellen jeweils unter einem anderen Blickwinkel betrachtet. Eine solche schlechte Ablesbarkeit ist nicht nur störend, sondern reduziert durch die mögliche Ablenkung des Fahrers auch die Verkehrssicherheit bei Kraftfahrzeugen.

Um hier Abhilfe zu schaffen, ist es Aufgabe der Erfindung, eine Anzeigeeinrichtung mit einer Flüssigkristallzelle der eingangs genannten Art zu schaffen, deren Anzeigefarbe weitgehend unabhängig vom Blickwinkel des Beobachters ist.

Diese Aufgabe wird gemäß der Erfindung dadurch gelöst, daß die Transmissionskurve des Spektralfilters ein Maximum oder mehrere Maxima im Bereich des Minimums bzw. der Minima der Transmissionskurve der nicht lichtdurchlässig geschalteten Abschnitte der Flüssigkristallzelle aufweist und außerhalb des Bereiches des Minimums bzw. der Minima nahe null ist.

Da das Licht der Lichtquelle, das den Spektralfilter durchtreten hat, nur noch einen eingegrenzten Spektralbereich umfaßt, der zudem von den nicht lichtdurchlässig geschalteten Abschnitten der Flüssigkristallzelle nahezu vollständig gesperrt wird, können unabhängig vom Blickwinkel keine signifikanten Farbverfälschungen auftreten. Außerdem ist der Kontrast der Anzeige sehr hoch. Besonders vorteilhaft ist die Erfindung, wenn die nicht lichtdurchlässig geschalteten Abschnitte der Flüssigkristallzelle einen großen Anteil der Anzeigefläche der Flüssigkristallzelle einnehmen, wie es bei Negativ-Anzeigen, die helle Segmente vor einem dunklen Hintergrund darstellen, der Fall ist. Zu den nicht lichtdurchlässig geschalteten Abschnitten der Flüssigkristallzelle gehören dabei sowohl ansteuerbare Segmente, die in der Weise angesteuert sind, daß ein Lichtdurchgang durch die Zelle im wesentlichen gesperrt ist, als auch weitere Bereiche der Zelle, durch die in sämtlichen Betriebszuständen der Lichtdurchgang im wesentlichen gesperrt ist. Im Gegensatz dazu sind die lichtdurchlässig geschalteten Abschnitte der Flüssigkristallzelle in der Weise angesteuerte Segmente, daß ein Lichtdurchtritt durch die Zelle ermöglicht ist.

Durch die erfindungsgemäße Anpassung der Transmissionskurve, d. h. des spektralen Transmissionsgrades in Abhängigkeit von der Wellenlänge, des Spektralfilters an die Transmission der dunklen Abschnitte, die einzelne Pixel, Segmente oder Flächenbereiche umfassen können, der Flüssigkristallzelle wird nicht nur die Farbvariation innerhalb einer Flüssigkristallzelle minimiert, sondern gleichzeitig ist es auch möglich, Flüssigkristallzellen verschiedener Technologie, die üblicherweise eine voneinander abweichende Farbverfälschung aufweisen, jeweils in gleicher Weise erfindungsgemäß zu beleuchten, ohne daß der Farbeindruck der Flüssigkristallzellen sich unterscheidet.

Darüber hinaus ist mit der Erfindung eine ungewöhnliche Helligkeit durch die hohe Transmission des Spektralfilters in den zur Darstellung verwendeten Wellenlängenbereichen der Anzeigeeinrichtung zu erzielen, ohne daß eine größere Anzahl oder eine höhere Leuchtstärke aufweisende Lichtquellen verwendet werden müßten. Somit ist der Energiebedarf ebenso wie die unerwünschte Abwärme der Anzeigeeinrichtung besonders niedrig. Eine Verwendung der erfindungsgemäßen Anzeigeeinrichtung ist daher nicht nur in Kraftfahrzeugen, sondern in allen Fällen, bei denen großflächige Flüssigkristallzellen eingesetzt werden, wie z. B. in tragbaren Computern, von besonderem Vorteil.

Gemäß einer vorteilhaften Weiterbildung der Erfindung weist die Lichtquelle ein breitbandiges Emissionsspektrum auf. Auf diese Weise können zur Beleuchtung kostengünstige Lichtquellen wie Glühlampen verwendet werden, und die Lichtquelle kann gegebenenfalls neben der Beleuchtung der Flüssigkristallzelle zur Beleuchtung weiterer Anzeigen der Anzeigeeinrichtung genutzt werden.

Man könnte sich vorstellen, als Flüssigkristallzelle eine transmissive Zelle vorzusehen, die eine Darstellung mit Hilfe einer ständig eingeschalteten Lichtquelle gewährleistet. Insbesondere bei zumindest teilweisem Betrieb der Anzeigeeinrichtung unter großer Umgebungshelligkeit, z. B. Tageslicht, ist es jedoch von besonderem Vorteil, wenn die Flüssigkristallzelle eine transflektive Zelle ist, so daß auch das auf die Zelle auffallende Auflicht zur Beleuchtung herangezogen werden kann.

Die Helligkeit der auf der Flüssigkristallzelle dargestellten Elemente ist besonders hoch, wenn der spektrale Transmissionsgrad lichtdurchlässig geschalteter Abschnitte der Flüssigkristallzelle in dem Bereich des Maximums bzw. der Maxima der Transmissionskurve des Spektralfilters in etwa constant ist. Zudem ergibt sich dadurch auch in den geschalteten Abschnitten eine sehr gleichmäßige, blickwinkelunabhängige Färbung.

Vorteilhaft besonders kostengünstig ist es, wenn die Flüssigkristallzelle eine auch in großen Stückzahlen einfach herzustellende TN (Twisted Nematic)-Zelle ist. Ein besonders hoher Kontrast der Flüssigkristallanzeige wird erreicht, wenn vorzugsweise die Flüssigkristallzelle eine ESTN (Enhanced Super Twisted Nematic)-Zelle ist.

Für eine gleichmäßige Ausleuchtung der Flüssigkristallzelle über ihre gesamte Fläche ist es von Vorteil, wenn gemäß einer anderen Weiterbildung der Erfindung in dem Lichtweg zwischen Lichtquelle und Flüssigkristallzelle ein Diffusor, z. B. eine Streuscheibe, angeordnet ist. Dabei ist der Spektralfilter vorzugsweise im Lichtweg zwischen Diffusor und Flüssigkristallzelle angeordnet, so daß eine Beeinträchtigung der Eigenschaften des gefilterten Lichts durch den Diffusor vermieden wird. Der Spektralfilter kann an oder auf dem Diffusor mit diesem ein einziges Bauteil bildend angebracht sein oder als separates Element, z. B. in Form einer Filterscheibe, in den Lichtweg eingefügt sein.

Gemäß einer anderen vorteilhaften Weiterbildung der Erfindung weist der Spektralfilter eine Scheibe mit einem Farbdruck auf. Damit ist der Spektralfilter nicht nur einfach und kostengünstig auch in großen Stückzahlen herstellbar, sondern es ist zudem problemlos möglich, den Spektralfilter auf einem anderen Element, z. B. einer Streuscheibe, aufzubringen.

Demgegenüber sieht eine andere vorteilhafte Weiterbildung der Erfindung vor, daß der Spektralfilter eine gegossene oder gespritzte oder gezogene Scheibe mit eingelagerten Farbpigmenten aufweist. Damit ergibt sich die Möglichkeit, eine Vielzahl von Farbpigmenten in hoher Konzentration in die Scheibe einzulagern, wodurch eine sehr präzise spektrale Anpassung des Filters zu erreichen ist. Darüber hinaus kann durch eine vorteilhafte zusätzliche Einlagerung von Streupigmenten in die Scheibe auf einen zusätzlichen Diffusor verzichtet werden. Optisch besonders hochwertig sind gezogene Scheiben.

Man könnte sich vorstellen, als Scheibe für den Spektralfilter eine Glasscheibe zu verwenden. Dagegen spricht jedoch das hohe Gewicht einer solchen Scheibe und ihre schlechte Ver- und Bearbeitbarkeit. Gemäß einer anderen vorteilhaften Weiterbildung der Erfindung ist die Scheibe daher eine Polymethylmethacrylat oder Polycarbonat aufweisende Kunststoffscheibe, wodurch sich eine hohe optische Qualität und eine leichte Herstell- und Bearbeitbarkeit der Scheibe ergibt.

Eine vorteilhaft sehr gute spektrale Anpassung des Spektralfilters wird möglich, wenn der Spektralfilter ein Interferenzfilter ist.

Um in einem abgegrenzten Anzeigebereich der Flüssigkristallzelle eine von dem Wellenlängenbereich des Spektralfilters verschiedene Anzeigefarbebspw. zur Signalisation eines Warnhinweises - zuzulassen, weist der Spektralfilter gemäß einer anderen vorteilhaften Weiterbildung der Erfindung eine Ausnehmung auf. Da diese Ausnehmung nur einen geringen, abgegrenzten Anzeigebereich umfaßt, ergeben sich keine nachteiligen Auswirkungen auf die angeführten Vorteile der erfindungsgemäßen Anzeigeeinrichtung.

Die Anzeigefarbe des abgegrenzten Anzeigebereichs der Flüssigkristallzelle ist unter anderem abhängig von der Farbe des Lichts und den Eigenschaften der Flüssigkristallsubstanz der Zelle. Besonders vorteilhaft ist es, wenn im Lichtweg zwischen Lichtquelle und Flüssigkristallzelle korrespondierend mit der Ausnehmung des Spektralfilters ein Farbfilter angeordnet ist, so daß die Anzeigefarbe mit Hilfe des Farbfilters festgelegt werden kann (z. B. rot für einen Warnhinweis zu erhöhter Kühlwassertemperatur eines Kraftfahrzeugmotors).

Gemäß einer anderen vorteilhaften Weiterbildung der Erfindung ist eine zweite Flüssigkristallzelle vorgesehen, die entsprechend der ersten Flüssigkristallzelle durchleuchtbar ist. Damit ist sichergestellt, daß beide Flüssigkristallzellen unabhängig vom Blickwinkel und damit von der Position des Beobachters fortwährend dieselbe Anzeigefarbe aufweisen, ein unterschiedlicher Farbeindruck ist ausgeschlossen.

Ist entsprechend einer anderen vorteilhaften Weiterbildung der Erfindung die erste Flüssigkristallzelle eine ESTN-Zelle (bspw. für eine kontrastreiche Anzeige) und die zweite Flüssigkristallzelle eine TN-Zelle (bspw. für eine großflächige, kostengünstige Anzeige), so treten auch dabei zwischen den Zellen unabhängig vom Blickwinkel keine Farbunterschiede oder -verfälschungen auf.

Gleiches gilt auch bei einer anderen vorteilhaften Weiterbildung der Erfindung, bei der die erste Flüssigkristallzelle eine DSTN (Double Super Twisted Nematic)-Zelle und die zweite Flüssigkristallzelle eine TN- oder ESTN-Zelle ist.

Besonders kostengünstig in Herstellung und Aufbau ist die erfindungsgemäße Anzeigeeinrichtung, wenn vorteilhaft der Spektralfilter und die Flüssigkristallzelle ein einziges Bauteil bilden. Besonders günstig ist es dabei, wenn der Spektralfilter durch Einfärbung eines der Lichtquelle zugewandten Polfilters der Flüssigkristallzelle oder eines der Lichtquelle zugewandten Substrats (bspw. Glasplatte) der Flüssigkristallzelle gebildet wird oder durch Einlegen einer Filterscheibe zwischen die Substrate (bspw. Glasplatten) der Flüssigkristallzelle.

Die Erfindung kann sehr unterschiedlich ausgeführt wird. Sie wird im folgenden anhand von in den beigefügten Zeichnungen dargestellten Ausführungsbeispielen näher erläutert. Darin zeigt
- Fig. 1: eine erfindungsgemäße Anzeigeeinrichtung mit einer Flüssigkristallzelle in schematisierter, geschnittener Darstellung,
- Fig. 2: eine erfindungsgemäße Anzeigeeinrichtung mit zwei Flüssigkristallzellen in schematisierter, geschnittener Darstellung und
- Fig. 3: ein Transmissionsdiagramm.

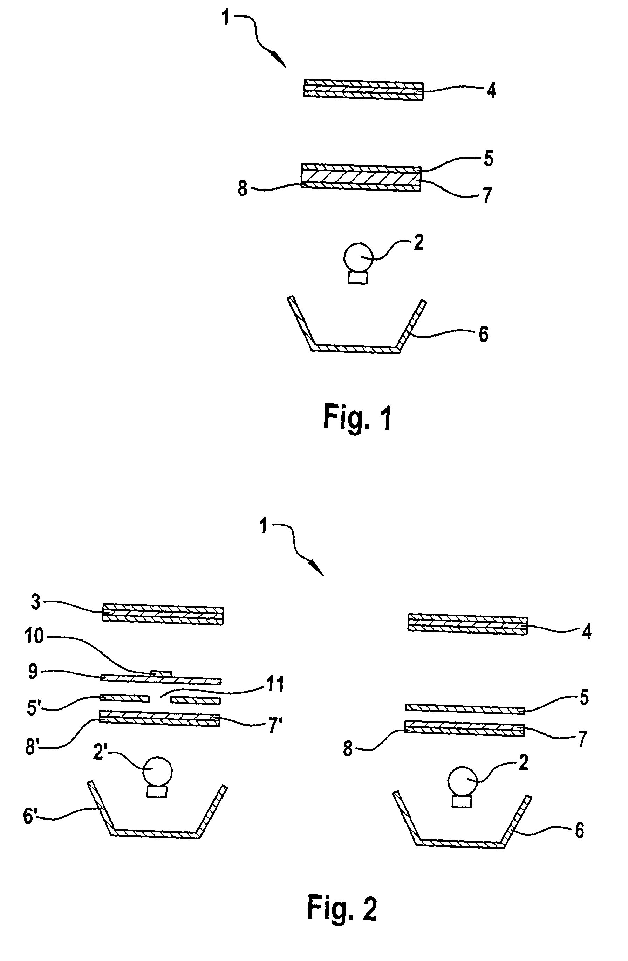

In Figur 1 ist eine Anzeigeeinrichtung 1 in einer schematisierten, geschnittenen Seitenansicht dargestellt. Eine von einer ESTN-Zelle gebildete Flüssigkristallzelle 4 der Anzeigeeinrichtung 1 ist mittels einer Lichtquelle 2 von einer einem Beobachter abgewandten Seite her be- und durchleuchtbar. Zur Erhöhung der Leuchtstärke ist an der Rückseite der Lichtquelle 2 ein Reflektor 6 angeordnet. Die Lichtquelle 2 kann die Flüssigkristallzelle 4 - wie dargestellt - direkt be- und durchleuchten, oder der Zelle kann das Licht der Lichtquelle mittels eines Lichtleiters zugeführt werden, so daß eine seitliche Anordnung der Lichtquelle ermöglicht ist.

In dem Lichtweg zwischen Lichtquelle 2 und Flüssigkristallzelle 4 befindet sich ein von einer Streuscheibe gebildeter Diffusor 7, der an seiner Rückseite mit einer Vergleichmäßigungsschicht 8 versehen ist, die Helligkeitsdifferenzenhervorgerufen z. B. durch einen gegenüber der Lichtquelle 2 gebildeten Lichtfleck - in der Beleuchtungsebene vermindert. Die Vergleichmäßigungsschicht 8 kann ein Rasterdruck sein. An seiner Vorderseite trägt der Diffusor 7 einen Spektralfilter 5, der auf den Diffusor 7 aufgedruckt ist.

Eine weitere Anzeigeeinrichtung 1 mit einer ersten, als ESTN-Zelle ausgebildeten Flüssigkristallzelle 4, die mittels einer Lichtquelle 2 be- und durchleuchtbar ist, und mit einer zweiten, als TN-Zelle ausgebildeten Flüssigkristallzelle 3, die mittels einer Lichtquelle 2' be- und durchleuchtbar ist, zeigt Figur 2. An den Rückseiten der Lichtquellen 2, 2' sind Reflektoren 6, 6' und im Lichtweg zwischen den Lichtquellen 2, 2' und den Flüssigkristallzellen 4, 3 jeweils Diffusoren 7, 7' angeordnet. Auf ihrer Rückseite sind die Diffusoren 7, 7' jeweils mit einer Vergleichmäßigungsschicht 8, 8' versehen, und auf ihrer Vorderseite, den Flüssigkristallzellen 4, 3 zugewandt, befinden sich Spektralfilter 5, 5'. Es ist - anders als dargestellt - ebenso denkbar, daß die Spektralfilter 5, 5' und/oder die Diffusoren 7, 7' und/oder die Vergleichmäßigungsschichten 8, 8' jeweils ein einziges Bauteil bzw. Element bilden.

Der im linken Teil der Anzeigeeinrichtung 1 dargestellte Spektralfilter 5' weist eine Ausnehmung 11 auf, wobei im Lichtweg zwischen der Lichtquelle 2' und der Flüssigkristallzelle 3 korrespondierend mit der Ausnehmung 11 des Spektralfilters 5' ein Farbfilter 10, aufgedruckt auf einen transparenten Träger 9, angeordnet ist.

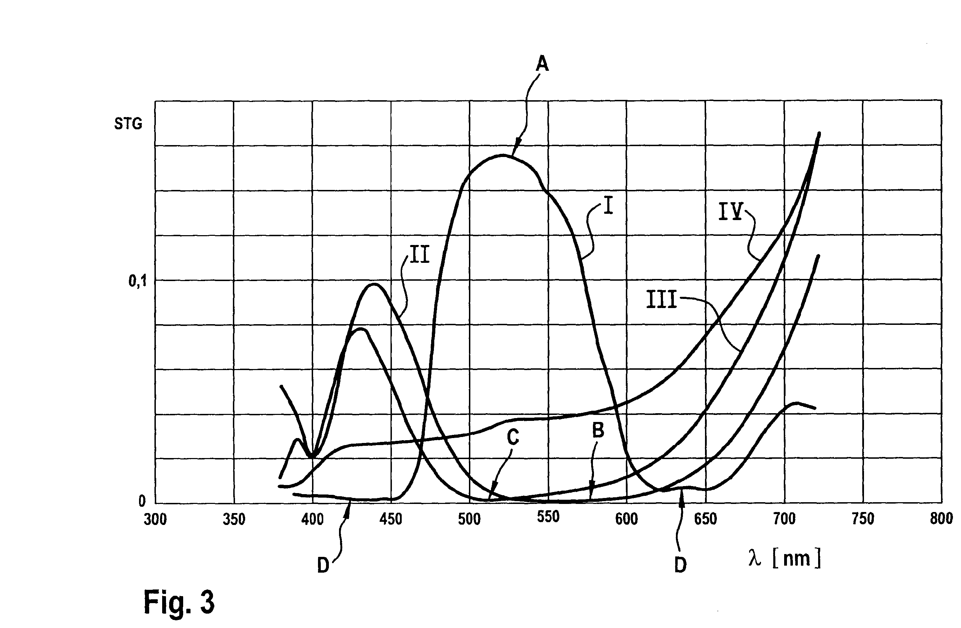

Ein Transmissionsdiagramm mit Transmissionskurven I, II, III, IV, die jeweils einen spektralen Transmissionsgrad STG in Abhängigkeit von der Lichtwellenlänge λ zeigen, ist in Figur 3 dargestellt. Es ist zu erkennen, daß eine Transmissionskurve II nicht lichtdurchlässig geschalteter Abschnitte einer TN-Flüssigkristallzelle einen Bereich B minimaler Transmission von in etwa 490 nm bis in etwa 620 nm aufweist; zu niedrigeren sowie zu höheren Wellenlängen hin steigt der spektrale Transmissionsgrad STG hingegen deutlich an. Ähnlich verläuft eine Transmissionskurve III nicht lichtdurchlässig geschalteter Abschnitte einer ESTN-Flüssigkristallzelle mit einem Bereich C minimaler Transmission von in etwa 470 nm bis in etwa 600 nm; auch hier steigt der spektrale Transmissionsgrad STG zu niedrigeren sowie zu höheren Wellenlängen hin deutlich an.

Eine Transmissionskurve I eines Spektralfilters weist einen Bereich A maximaler Transmission in den Bereichen B, C minimaler Transmission der nicht lichtdurchlässig geschalteten Abschnitte der TN- und der ESTN-Flüssigkristallzelle auf; bei niedrigeren und höheren Wellenlängen ist der spektrale Transmissionsgrad nahe null (Bereiche D minimaler Transmission des Spektralfilters). Das Licht, das den Spektralfilter durchtreten hat, weist somit Wellenlängen von in etwa 470 nm bis in etwa 580 nm auf und wird von den nicht lichtdurchlässig geschalteten Abschnitten der Flüssigkristallzellen vollständig gesperrt.

Der Bereich A maximaler Transmission der Transmissionskurve I des Spektralfilters weist hier ein ausgeprägtes, breites Maximum auf, könnte jedoch auch wellig ausgebildet sein und mehrere Maxima besitzen. Entsprechendes gilt auch für die Bereiche B, C minimaler Transmission der Transmissionskurven II, III nicht lichtdurchlässig geschalteter Abschnitte der Flüssigkristallzellen: Die Bereiche B, C weisen in diesem Ausführungsbeispiel jeweils ein ausgeprägtes, sehr breites Minimum auf; sie könnten jedoch auch wellig ausgebildet sein und mehrere Minima besitzen.

Zum Vergleich ist eine Transmissionskurve IV lichtdurchlässig geschalteter Abschnitte der Flüssigkristallzellen eingezeichnet, wobei zu erkennen ist, daß der spektrale Transmissionsgrad dieser lichtdurchlässig geschalteten Abschnitte in dem relevanten, durch den Spektralfilter vorgegebenen Wellenlängenbereich von in etwa 470 nm bis in etwa 580 nm im wesentlichen constant ist.

## Patentansprüche

1. Anzeigeeinrichtung, insbesondere in einem Kraftfahrzeug, mit einer von einer Lichtquelle durchleuchtbaren Flüssigkristallzelle und einem in dem Lichtweg zwischen Lichtquelle und Flüssigkristallzelle angeordneten Spektralfilter, wobei die Transmissionskurve nicht lichtdurchlässig geschalteter Abschnitte der Flüssigkristallzelle im Wellenlängenbereich des sichtbaren Lichts einen Bereich eines Minimums oder mehrerer Minima und daran jeweils angrenzende Bereiche höherer Transmission aufweist, **dadurch gekennzeichnet,** daß die Transmissionskurve (I) des Spektralfilters (5) ein Maximum oder mehrere Maxima im Bereich (C) des Minimums bzw. der Minima der Transmissionskurve (III) der nicht lichtdurchlässig geschalteten Abschnitte der Flüssigkristallzelle (4) aufweist und außerhalb des Bereichs (C) des Minimums bzw. der Minima nahe null ist.

2. Anzeigeeinrichtung nach Anspruch 1, **dadurch gekennzeichnet,** daß die Lichtquelle (6) ein breitbandiges Emissionsspektrum aufweist.

3. Anzeigeeinrichtung nach einem der vorhergehenden Ansprüche, **dadurch gekennzeichnet,** daß die Flüssigkristallzelle (4) eine transflektive Zelle ist.

4. Anzeigeeinrichtung nach einem der vorhergehenden Ansprüche, **dadurch gekennzeichnet,** daß der spektrale Transmissionsgrad lichtdurchlässig geschalteter Abschnitte der Flüssigkristallzelle (4) in dem Bereich (A) des Maximums bzw. der Maxima der Transmissionskurve (1) des Spektralfilters (5) in etwa constant ist.

5. Anzeigeeinrichtung nach einem der vorhergehenden Ansprüche, **dadurch gekennzeichnet,** daß die Flüssigkritstallzelle (3) eine TN-Zelle ist.

6. Anzeigeinrichtung nach einem der Ansprüche 1 bis 4, **dadurch gekennzeichnet,** daß die Flüssigkristallzelle (4) eine ESTN-Zelle ist.

7. Anzeigeeinrichtung nach einem der vorhergehenden Ansprüche, **dadurch gekennzeichnet,** daß in dem Lichtweg zwischen Lichtquelle (2) und Flüssigkristallzelle (4) ein Diffusor (7) angeordnet ist.

8. Anzeigeeinrichtung nach Anspruch 7, **dadurch gekennzeichnet,** daß der Spektralfilter (5) im Lichtweg zwischen Diffusor (7) und Flüssigkristallzelle (4) angeordnet ist.

9. Anzeigeeinrichtung nach einem der vorhergehenden Ansprüche, **dadurch gekennzeichnet,** daß der Spektralfilter eine Scheibe mit einem Farbdruck aufweist.

10. Anzeigeeinrichtung nach einem der vorhergehenden Ansprüche, **dadurch gekennzeichnet,** daß der Spektralfilter eine gegossene oder gespritzte oder gezogene Scheibe mit eingelagerten Farbpigmenten aufweist.

11. Anzeigeeinrichtung nach Anspruch 9 oder 10, **dadurch gekennzeichnet,** daß die Scheibe eine Polymethylmethacrylat oder Polycarbonat aufweisende Kunststoffscheibe ist.

12. Anzeigeeinrichtung nach einem der vorhergehenden Ansprüche, **dadurch gekennzeichnet,** daß der Spektralfilter ein Interferenzfilter ist.

13. Anzeigeeinrichtung nach einem der vorhergehenden Ansprüche, **dadurch gekennzeichnet,** daß der Spektralfilter (5') eine Ausnehmung (11) aufweist.

14. Anzeigeeinrichtung nach Anspruch 13, **dadurch gekennzeichnet,** daß im Lichtweg zwischen Lichtquelle (2') und Flüssigkristallzelle (3) korrespondierend mit der Ausnehmung (11) des Spektralfilters (5') ein Farbfilter (10) angeordnet ist.

15. Anzeigeeinrichtung nach einem der vorhergehenden Ansprüche, **dadurch gekennzeichnet,** daß eine zweite Flüssigkristallzelle (3) vorgesehen ist, die entsprechend der ersten Flüssigkristallzelle (4) durchleuchtbar ist.

16. Anzeigeeinrichtung nach Anspruch 15, **dadurch gekennzeichnet,** daß die erste Flüssigkristallzelle (4) eine ESTN-Zelle und die zweite Flüssigkristallzelle (3) eine TN-Zelle ist.

17. Anzeigeeinrichtung nach Anspruch 15, **dadurch gekennzeichnet,** daß die erste Flüssigkristallzelle (4) eine DSTN-Zelle und die zweite Flüssigkristallzelle (3) eine TN- oder ESTN-Zelle ist.

18. Anzeigeeinrichtung nach einem der vorhergehenden Ansprüche, **dadurch gekennzeichnet,** daß der Spektralfilter und die Flüssigkristallzelle ein einziges Bauteil bilden.
